# EUROPÄISCHE PATENTANMELDUNG

(11) **EP 0 938 183 A1**
(43) Veröffentlichungstag der Anmeldung: **25.08.1999**
(21) Anmeldenummer: 98810129.1
(22) Anmeldetag: 18.02.1998
(51) Int. Cl.: H02K 15/10

(54) **Verfahren und Vorrichtung zum Einlegen von Isolationshülsen in Axialnuten rotationssymmetrischer Körper von elektrischen Geräten**

(71) Anmelder: ATS Wickel- und Montagetechnik AG, 5436 Würenlos (CH)
(72) Erfinder: Ulrich, Peter, 8964 Rudolfstetten (CH)
(74) Vertreter: Patentanwälte Breiter + Wiedmer AG

(57) **Zusammenfassung**

Eine Vorrichtung zum Einlegen von Isolationshülsen (32) in am Aussenumfang rotationssymmetrischer Körper (50) von elektrischen Geräten angeordnete Axialnuten umfasst einen Einschusskanal (28) zum Vorschieben eines streifenförmigen Isolationsmaterials (30), eine Schneideinrichtung (40) zum Ablängen des streifenförmigen Isolationsmaterials (30) auf das gewünschte Mass, einen um seine Achsenrichtung (x) drehbaren Revolver (10), an dessen Aussenumfang eine der Anzahl Axialnuten des mit Isolationshülsen (32) zu bestückenden rotationssymmetrischen Körpers (50) entsprechende Anzahl Axialnuten (16) angeordnet sind, und
einen jeder Axialnut (16) zugeordneten Ausstösser (24) zum gleichzeitigen Einschieben der Isolationshülsen (32) aus den Axialnuten (16) des Revolvers (10) in die Axialnuten des rotationssymmetrischen Körpers (50). Durch die Verwendung eines Revolvers kann die Taktzeit zum Bestücken eines rotationssymmetrischen Körpers mit Isolationshülsen erheblich reduziert werden.

## Beschreibung

Die Erfindung betrifft ein Verfahren und eine Vorrichtung zum Einlegen von Isolationshülsen in am Aussenumfang rotationssymmetrischer Körper von elektrischen Geräten angeordnete Axialnuten, wobei ein streifenförmiges Isolationsmaterial durch einen Einschusskanal vorgeschoben, auf das gewünschte Mass abgelängt, zur Bildung einer Isolationshülse in eine Nutenform eingedrückt und die Isolationshülse mit einem Ausstösser in eine Axialnut eines anschliessend an die Nutenform angeordneten rotationssymmetrischen Körpers eingeschoben wird. Im Rahmen der Erfindung liegt auch eine zur Durchführung des Verfahrens geeignete Vorrichtung.

Zur Isolation von Drahtwindungen gegen den zu wickelnden Stator oder Anker eines Elektromotors ist es bekannt, vor dem Wickelvorgang in die Axialnuten der zu wickelnden Körper Isolationshülsen aus beispielsweise Papier, Karton oder Kunststoff einzulegen. Bei einem bekannten Verfahren wird ein streifenförmiges Isolationsmaterial durch einen Einschusskanal vorgeschoben, auf das gewünschte Mass abgelängt, zur Bildung einer Isolationshülse in eine Nutenform eingedrückt und die Isolationshülse mit einem Ausstösser in eine Axialnut eines anschliessend an die Nutenform angeordneten rotationssymmetrischen Körpers eingeschoben. Nach dem Verschalten des rotationssymmetrischen Körpers um eine Nutenteilung wird eine weitere in die Nutenform eingedrückte Isolationshülse mit den Ausstösser in die nächste freie Axialnut des rotationssymmetrischen Körpers eingeschoben. Dieser Vorgang, d.h. Verschalten des rotationssymmetrischen Körpers um jeweils eine Nutenteilung und Einschieben jeweils einer Isolationshülse, wird solange wiederholt, bis sämtliche Axialnuten des rotationssymmetrischen Körpers mit Isolationshülsen gefüllt sind.

Ein wesentlicher Nachteil des vorstehend beschriebenen Verfahrens liegt darin, dass das Bestücken der Axialnuten eines rotationssymmetrischen Körpers mit Isolationshülsen in einzelnen Schritten mit jeweils einem Ausstösserhub je Isolationshülse erfolgt, was einen erheblichen Zeitbedarf erfordert.

Der Erfindung liegt deshalb die Aufgabe zugrunde, ein Verfahren der eingangs genannten Art sowie eine zur Durchführung des Verfahrens geeignete Vorrichtung zu schaffen, mit denen die Taktzeit zur Bestückung der Axialnuten des rotationssymmetrischen Körpers mit Isolationshülsen gegenüber herkömmlichen Verfahren und Vorrichtungen erheblich reduziert werden kann.

Zur erfindungsgemässen Lösung der Aufgabe führt bezüglich des Verfahrens, dass die auf das gewünschte Mass abgelängten Isolationsstreifen nacheinander in am Aussenumfang eines um seine Achsenrichtung drehbaren Revolvers angeordnete Axialnuten eingedrückt werden, wobei der Revolver vor dem Eindrücken jedes nachfolgenden Isolationsstreifens um jeweils eine Nutenteilung verschaltet wird, und dass alle Isolationshülsen mit einem einzigen Ausstösserhub aus den Axialnuten des Revolvers in die in gleicher Anzahl vorhandenen Axialnuten des rotationssymmetrischen Körpers eingeschoben werden.

Das erfindungsgemässe Bestücken eines Revolvers mit einer den Axialnuten des rotationssymmetrischen Körpers entsprechenden Anzahl Isolationshülsen hat den entscheidenden Vorteil, dass die Ausstösser in einem einzigen Arbeitstakt die Axialnuten des rotationssymmetrischen Körpers mit Isolationshülsen bestücken, wodurch die Taktzeit erheblich reduziert wird. Hinzu kommt, dass der zu bestückende rotationssymmetrische Körper nur eine kurze Zeit in der Bestückungsstation verbleiben muss und somit mehr Handlingzeit für andere Arbeitsschritte verbleibt.

Eine erfindungsgemässe Vorrichtung zum Einlegen von Isolationshülsen in am Aussenumfang rotationssymmetrischer Körper von elektrischen Geräten angeordnete Axialnuten weist folgende Merkmale auf:
- Einen Einschusskanal zum Vorschieben eines streifenförmigen Isolationsmaterials
- eine Schneideinrichtung zum Ablängen des streifenförmigen Isolationsmaterials auf das gewünschte Mass
- einen um seine Achsenrichtung drehbaren Revolver, an dessen Aussenumfang eine der Anzahl Axialnuten des mit Isolationshülsen zu bestückenden rotationssymmetrischen Körpers entsprechende Anzahl Axialnuten angeordnet sind, und
- einen jeder Axialnut zugeordneten Ausstösser zum gleichzeitigen Einschieben der Isolationshülsen aus den Axialnuten des Revolvers in die Axialnuten des rotationssymmetrischen Körpers.

Bei einer bevorzugten Ausführungsform der erfindungsgemässen Vorrichtung ist der Revolver an seiner Austrittsseite konisch zulaufend ausgebildet und von einer Einlaufhülse zur Einführung der Isolationshülsen aus den Axialnuten des Revolvers in die Axialnuten des rotationssymmetrischen Körpers übergriffen. Zweckmässigerweise ist hierbei die Einlaufhülse mit dem Revolver starr verbunden und steht mit einem Antriebsmittel zur Verschaltung des Revolvers in Wirkverbindung.

Ein besonders bevorzugter Einsatzbereich des erfindungsgemässen Verfahrens und der Vorrichtung ist das Einlegen von Isolationshülsen in Axialnuten von Statoren und Ankern von Elektromotoren.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- Fig. 1: eine teilweise geschnittene Frontansicht einer Bestückungsvorrichtung;
- Fig. 2: eine teilweise geschnittene Seitenansicht der Bestückungsvorrichtung von Fig. 1;
- Fig. 3: einen Querschnitt durch den Anker von Fig. 1 gemäss deren Linie I-I.

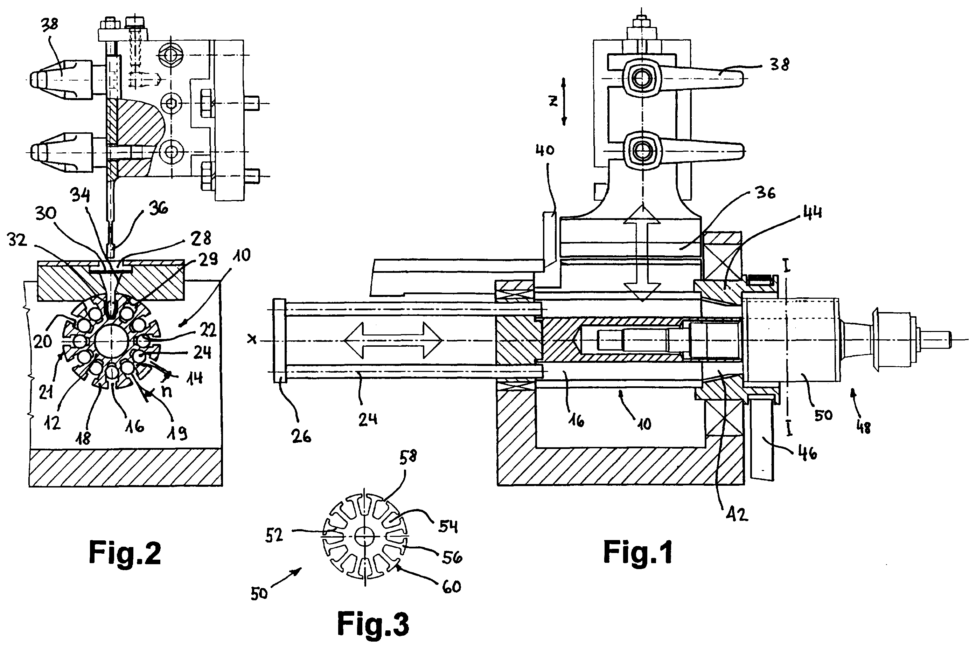

Eine in den Fig. 1 und 2 dargestellte Vorrichtung zum Beschicken des Ankerkörpers eines Elektromotorankers mit Isolationshülsen weist als Kernstück einen um seine Achsenrichtung x drehbaren Revolver 10 auf.

Der in Fig. 2 näher wiedergegebene Revolver 10 besteht im wesentlichen aus einem rohrförmigen Körper 12 mit von diesem radial nach aussen abragenden Zähnen 14, die Axialnuten 16 als Schlitze zur Aufnahme von Isolationshülsen 32 bilden. Die einzelnen Zähne 14 des Revolvers 10 weisen unter Bildung einer Hinterschneidung 20 ein querschnittlich etwa T-förmiges freies Ende 18 auf. Die freien Enden 18 der Zähne 14 bilden die durch Öffnungsschlitze 19 der Axialnuten 16 zur Einführung der Isolationshülsen 32 unterbrochene äussere Oberfläche 21 des Revolvers 10.

In den Wänden der Axialnuten 16 sind längslaufende Ausnehmungen 22 zur Aufnahme stangenförmiger Ausstösser 24 angeordnet. Die zugehörigen Ausstösser 24 sind an einer gemeinsamen Ausstösserplatte 26 festgelegt.

Oberhalb und zum Teil vor dem Revolver 10 ist ein Einschusskanal 28 zum Vorschieben eines Isolationsstreifens 30 aus beispielsweise Papier, Karton oder Kunststoff angeordnet. Direkt oberhalb des Revolvers 10 liegt die innere Oberfläche 29 des Einschusskanals 28 der äusseren Oberfläche 21 des Revolvers im wesentlichen formschlüssig an. In diesem Bereich sind die Seitenwände 34 des Einschusskanals 28 konisch auf die Axialnuten 16 des Revolvers 10 zulaufend angeordnet. Zum Eindrücken des vorgängig mit einem Messer 40 auf die gewünschte Länge zugeschnittenen Isolationsstreifen 30 in eine Axialnut 16 des Revolvers 10 dient ein oberhalb des Einschusskanals 28 und des Revolvers 10 angeordnetes, mittels Schnellspannhebeln 38 auswechselbares Schwert 36. Schwert 36 und Messer 40 sind in vertikaler Bewegungsrichtung z verschiebbar.

Der Revolver 10 ist an seinem dem zu beschickenden Ankerkörper 50 eines Elektromotorankers 48 zugewandten Ende 42 konisch zulaufend ausgestaltet und von einer Einlaufhülse 44 übergriffen. Diese Ausgestaltung ermöglicht ein problemloses Einschieben der Isolationshülsen 32 aus den Axialnuten 16 des Revolvers 10 in Axialnuten des Ankerkörpers 50. Die Einlaufhülse 44 ist mit dem Revolver 10 starr verbunden und über einen Antriebsriemen 46 verschaltbar.

Der in Fig. 3 dargestellte zylindrische Ankerkörper 50 weist radial nach aussen abragende Zähne 52 auf, die Axialnuten 16 als Schlitze zur Aufnahme der späteren Drahtwicklung bilden. Die einzelnen Zähne 52 des Ankerkörpers 50 weisen ein querschnittlich etwa T-förmiges freies Ende 56 auf. Die freien Enden 56 der Zähne 52 bilden die durch Öffnungsschlitze 58 der Axialnuten 54 zur späteren Drahteinführung unterbrochene äussere Oberfläche 60 des Ankerkörpers 50.

Nachfolgend wird die Funktionsweise der erfindungsgemässen Vorrichtung anhand der Zeichnung kurz erläutert.

Das streifenförmige Isolationsmaterial 30 wird durch den Einschusskanal 28 in der gewünschten Länge vorgeschoben und mittels des Messers 40 abgelängt. Der zugeschnittene Isolationsstreifen 30 wird anschliessend mit dem Schwert 36 in die darunterliegende Axialnut 16 des Revolvers 10 eingedrückt und verbleibt, von der Hinterschneidung 20 gehalten, in der Axialnut 16 als Isolationshülse 32. Dieser Vorgang, d.h. Vorschieben, Ablängen und Eindrücken des Isolationsstreifens 30 wird nach jeweils einer Drehung des Revolvers 10 um eine Nutenteilung n solange wiederholt, bis sämtliche Axialnuten 16 des Revolvers 10 mit Isolationshülsen 32 bestückt sind. Anschliessend werden die Isolationshülsen 32 mittels der Ausstösser 24 in einem einzigen Ausstösserhub in Achsenrichtung x aus den Axialnuten 16 des Revolvers 10 heraus in die Axialnuten 54 des Ankerkörpers 50 des bereitgestellten Elektromotorankers 48 eingeschoben. Es versteht sich von selbst, dass die Anzahl Axialnuten 16 des Revolvers 10 der Anzahl der Axialnuten 54 des Ankerkörpers 50 entspricht.

Aus der Zeichnung ist ohne weiteres verständlich, dass der Ankerkörper 50 während der Beschickung des Revolvers 10 mit Isolationshülsen 32 nicht in der Beschickungsvorrichtung angeordnet sein muss. Dadurch ergibt sich eine längere Handlingzeit für den Elektromotoranker 48 ausserhalb der Beschickungsstation, die für andere Bearbeitungsvorgänge genutzt werden kann.

## Patentansprüche

1. Verfahren zum Einlegen von Isolationshülsen (32) in am Aussenumfang rotationssymmetrischer Körper (50) von elektrischen Geräten angeordnete Axialnuten (54), wobei ein streifenförmiges Isolationsmaterial (30) durch einen Einschusskanal (28) vorgeschoben, auf das gewünschte Mass abgelängt, zur Bildung einer Isolationshülse (32) in eine Nutenform eingedrückt und die Isolationshülse (32) mit einem Ausstösser (24) in eine Axialnut (54) eines anschliessend an die Nutenform angeordneten rotationssymmetrischen Körpers (50) eingeschoben wird,
dadurch gekennzeichnet, dass
die auf das gewünschte Mass abgelängten Isolationsstreifen (30) nacheinander in am Aussenumfang eines um seine Achsenrichtung (x) drehbaren Revolvers (10) angeordnete Axialnuten (16) eingedrückt werden, wobei der Revolver (10) vor dem Eindrücken jedes nachfolgenden Isolationsstreifens (30) um jeweils eine Nutenteilung (n) verschaltet wird, und dass alle Isolationshülsen (32) mit einem einzigen Ausstösserhub aus den Axialnuten (16) des Revolvers (10) in die in gleicher Anzahl vorhandenen Axialnuten (54) des rotationssymmetrischen Körpers (50) eingeschoben werden.

2. Vorrichtung zum Einlegen von Isolationshülsen (32) in am Aussenumfang rotationssymmetrischer Körper (50) von elektrischen Geräten angeordnete Axialnuten (54), mit einem Einschusskanal (28) zum Vorschieben eines streifenförmigen Isolationsmaterials (30), einer Schneideinrichtung (40) zum Ablängen des streifenförmigen Isolationsmaterials (30) auf das gewünschte Mass, einer Nutenform und einem Schwert (36) zum Eindrücken des streifenförmigen Isolationsmaterials (30) zur Bildung einer Isolationshülse (32), und einem Ausstösser (24) zum Einschieben der Isolationshülse (32) in eine Axialnut (54) eines anschliessend an die Nutenform angeordneten rotationssymmetrischen Körpers (50),
dadurch gekennzeichnet, dass
mehrere Nutenformen als am Aussenumfang eines um seine Achsenrichtung (x) drehbaren Revolvers (10) angeordnete Axialnuten (16) ausgebildet sind und jeder Axialnut (16) ein Ausstösser (24) zum gleichzeitigen Einschieben der Isolationshülsen (32) aus den Axialnuten (16) des Revolvers (10) in die in gleicher Anzahl vorhandenen Axialnuten (54) des rotationssymmetrischen Körpers (50) zugeordnet ist.

3. Vorrichtung nach Anspruch 2, dadurch gekennzeichnet, dass der Revolver (10) an seiner Austrittsseite (42) konisch zulaufend ausgebildet und von einer Einlaufhülse (44) zum Einschieben der Isolationshülsen (32) aus den Ankernuten (16) des Revolvers (10) in die Axialnuten (54) des rotationssymmetrischen Körpers (50) übergriffen ist.

4. Vorrichtung nach Anspruch 3, dadurch gekennzeichnet, dass die Einlaufhülse (44) mit dem Revolver (10) starr verbunden ist und mit einem Antriebsmittel (46) zur Verschaltung des Revolvers (10) in Wirkverbindung steht.

5. Vorrichtung nach einem der Ansprüche 2 bis 4, dadurch gekennzeichnet, dass die Ausstösser (24) an einer gemeinsamen Ausstösserplatte (26) festgelegt sind.

6. Anwendung des Verfahrens nach Anspruch 1 oder Verwendung der Vorrichtung nach einem der Ansprüche 2 bis 5 zum Einlegen von Isolationshülsen in Axialnuten von Statoren und Ankern von Elektromotoren.
